# EUROPEAN PATENT SPECIFICATION

(11) **EP 4 307 800 B1**
(45) Date of publication and mention of the grant of the patent: **24.06.2026**
(21) Application number: 21930187.6
(22) Date of filing: 11.03.2021
(51) Int. Cl.: H04W 72/04, H04W 76/25

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 17.01.2024
(73) Proprietor: NTT DOCOMO, INC., Tokyo 100-6150 (JP)
(72) Inventor: HARADA, Kouhei, Tokyo 100-6150 (JP); HANAKI, Akihito, Tokyo 100-6150 (JP); MIN, Tianyang, Tokyo 100-6150 (JP)
(74) Representative: Hoffmann Eitle
(86) International application number: PCT/JP2021/009936
(87) International publication number: WO 2022/190334

(56) References cited:
- EP-A1- 3 745 809
- HUAWEI: "[AT113-e][230][eDCCA] Solution alternatives for SCG activation and deactivation (Huawei)", 3GPP DRAFT; R2-2101969, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210125 - 20210205, 5 February 2021 (2021-02-05), Mobile Competence Centre ; 650, route des Lucioles ; F-06921 Sophia-Antipolis Cedex ; France , XP051978145
- NTT DOCOMO, INC.: "Further consideration on SCG activation and deactivation", 3GPP DRAFT; R2-2101915, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210125 - 20210205, 22 January 2021 (2021-01-22), Mobile Competence Centre ; 650, route des Lucioles ; F-06921 Sophia-Antipolis Cedex ; France, XP052170884
- CMCC: "Signalling of SCG activation or deactivation", 3GPP DRAFT; R2-2101884, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210201, 15 January 2021 (2021-01-15), Mobile Competence Centre ; 650, route des Lucioles ; F-06921 Sophia-Antipolis Cedex ; France , XP051974746
- NTT DOCOMO, INC.: "Further consideration on SCG activation and deactivation", 3GPP DRAFT; R2-2104237, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210412 - 20210420, 5 April 2021 (2021-04-05), Mobile Competence Centre ; 650, route des Lucioles ; F-06921 Sophia-Antipolis Cedex ; France , XP051992620

## Description

### [FIELD OF THE INVENTION]

The present invention relates to a terminal and a communication method in a wireless communication system.

### [BACKGROUND OF THE INVENTION]

In 3GPP (3rd Generation Partnership Project), a wireless communication scheme called "5G" or "NR" (New Radio) is being discussed in order to realize further increase of system capacity, further increase of data transmission speed, and further decrease of delay in wireless sections (hereinafter this new communication scheme will be referred to as "NR"). In 5G, various wireless technologies and network architectures are being discussed in order to satisfy the requirements of achieving a throughput of 10 Gbps or more and keeping the delay in wireless sections to 1 ms or less (see, for example, Non-Patent Document 1).

In addition, in 3GPP standardization, a secondary cell group activation/deactivation function in dual connectivity operation (see, for example, Non-Patent Document 2) is being discussed, with the main purpose of reducing terminal power consumption. For example, operations that are not performed in a state in which the secondary cell group is deactivated are specified to reduce power consumption.

### [Related-Art Documents]

### [Non-Patent Documents]

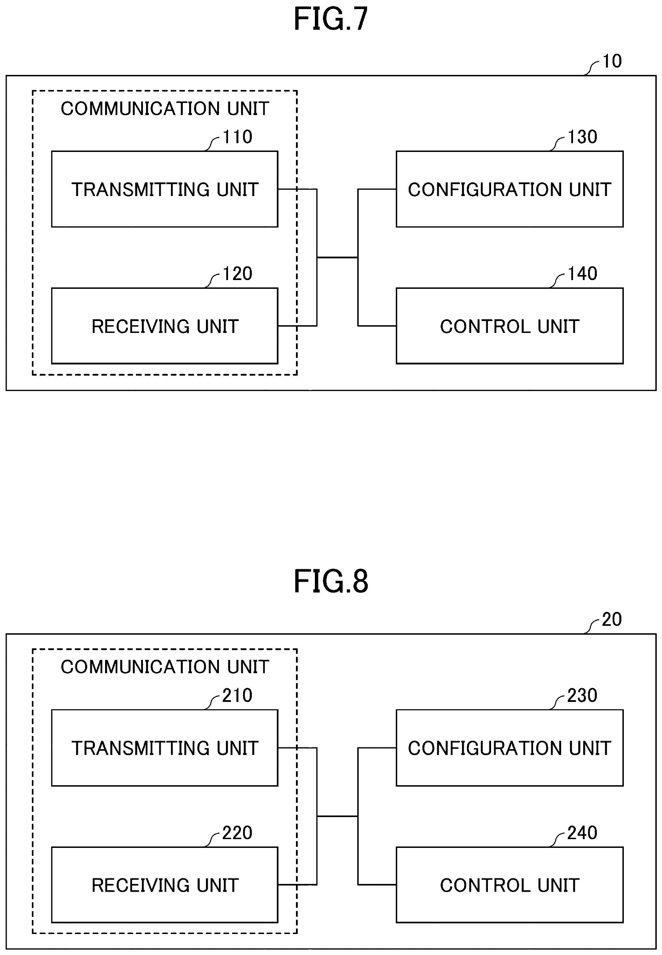

[Non-Patent Document 1] 3GPP TS 38.300 V16.4.0 (2020-12)
[Non-Patent Document 2] 3GPP TS 37.340 V16.4.0 (2020-12)
EP 3 745 809 A1 (HUAWEI TECH CO LTD [CN]), 2 December 2020 , aims to resolve the problem that an LTE base station cannot send an activation/deactivation indication to a terminal when a PDCP anchor is the LTE base station, by means of the LTE base station sending status information of an RB to the gNB after obtaining the status information of the RB, so that a MAC layer of the gNB generates the activation indication and send it to the terminal. This mechanism also applies to a scenario where the gNB is replaced with a DU in the gNB while the LTE station is replaced with a CN in the gNB. More in detail, both MAC CE corresponding to the status information of the duplication operation of the RB of the SCG and MAC CE corresponding to the one of the MCG are generated in the DU in the gNB and transmitted to the terminal. It is further disclosed that optionally, SN may send a response message to MN (considered as an anchor in the DC). The response message carries information used to indicate that the RB configuration is acknowledged or rejected, see pars. [0005], [0007], [0008], [0217], and Fig. 7.
Huawei: "[AT113-e] [230] [eDCCA] Solution alternatives for SCG activation and deactivation (Huawei)", 3GPP Draft, R2-2101969, vol. RAN WG2, 5 February 2021, proposes an SCG activation is indicated to the UE via the MCG, page 3. It also relates to an SCG deactivation where the deactivation could be indicated to the UE via the MCG or via the SCG and proposes that UE should be allowed to request network for the SCG deactivation by using e.g., UE Assistance Information procedure, pages 25 and 28.

### [SUMMARY OF THE INVENTION]

### [TECHNICAL PROBLEM]

In a case where a terminal is indicated by a network to perform secondary cell group activation, the terminal needs to perform the secondary cell group activation and communication in accordance with the indication by the network even in a situation where it is not suitable to perform communication in which the secondary cell group is activated , the situation including, for example, a case in which the remaining battery level of the terminal is low or a case in which the heat generation by the terminal is high.

The present invention has been made in view of the above, and it is therefore an object of the present invention to reduce the terminal load during communication according to dual connectivity in a wireless communication system.

### [SOLUTION TO PROBLEM]

The present invention is defined by the independent claims. Preferred embodiments are defined by the dependent claims. Further aspects and examples are provided for facilitating the understanding of the invention. According to an example, a terminal is provided. The terminal includes: a communication unit configured to perform communication to which dual connectivity is applied with a base station; a receiving unit configured to receive signaling indicating an indication to perform activation of a secondary cell group from the base station; and a transmitting unit configured to transmit to the base station a response including information indicating a rejection with respect to the indication or information indicating a request for performing deactivation of the secondary cell group.

### [ADVANTAGEOUS EFFECTS OF INVENTION]

This disclosure provides a technique for reducing the terminal load during the communication according to dual connectivity in a wireless communication system.

### [BRIEF DESCRIPTION OF THE DRAWINGS]

[FIG. 1] FIG. 1 is a diagram illustrating a wireless communication system example (1) according to an embodiment of the present invention.
[FIG. 2] FIG. 2 is a diagram illustrating a wireless communication system example (2) according to the embodiment of the present invention.
[FIG. 3] FIG. 3 is a sequence diagram illustrating a signaling example (1) according to the embodiment of the present invention.
[FIG. 4] FIG. 4 is a sequence diagram illustrating a signaling example (2) according to the embodiment of the present invention.
[FIG. 5] FIG. 5 is a diagram illustrating a signaling example (1) according to the embodiment of the present invention.
[FIG. 6] FIG. 6 is a diagram illustrating a signaling example (2) according to the embodiment of the present invention.
[FIG. 7] FIG. 7 is a diagram illustrating an example of a functional structure of the base station 10 according to the embodiment of the present invention.
[FIG. 8] FIG. 8 is a diagram illustrating an example of a functional structure of the terminal 20 according to the embodiment of the present invention.
[FIG. 9] FIG. 9 is a diagram illustrating an example of a hardware structure of the base station 10 or the terminal 20 according to the embodiment of the present invention.

### [DETAILED DESCRIPTION OF THE PREFERRED EMBODIMENTS]

Hereinafter, an embodiment of the present invention will be described with reference to the accompanying drawings. The embodiment described below is an example, and the embodiments to which the present invention can be applied are not limited to the following embodiment.

In operating a wireless communication system according to the embodiment of the present invention, conventional techniques may be used as appropriate. The conventional techniques include, but are not limited to, for example, conventional NR and LTE.

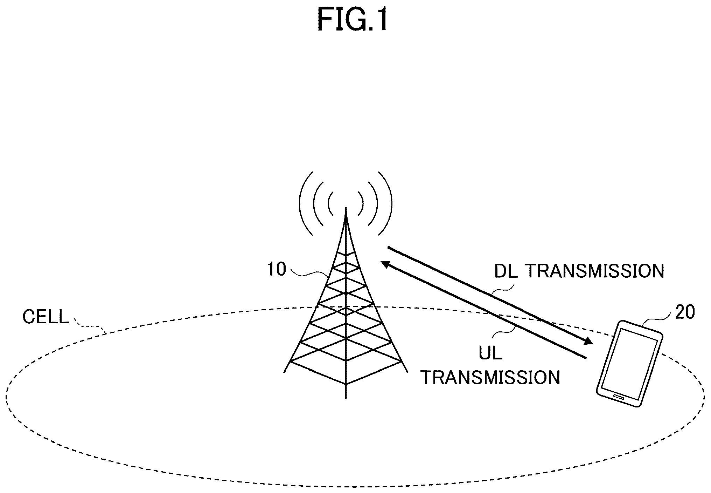

FIG. 1 is a diagram illustrating a wireless communication system example (1) according to the embodiment of the present invention. The wireless communication system according to the embodiment of the present invention includes a base station 10 and a terminal 20, as illustrated in FIG. 1. In FIG. 1, one base station 10 and one terminal 20 are illustrated, but this is an example, and there may be more than one of each.

The base station 10 is a communication device that provides one or more cells and performs wireless communication with the terminal 20. The physical resources of radio signals are defined in the time domain and the frequency domain. The time domain resources may be defined or referred to as OFDM symbols, and the frequency domain resources may be defined or referred to as subcarriers or resource blocks. The TTI (Transmission Time Interval) in the time domain may be a slot, or the TTI may be a subframe.

The base station 10 can perform carrier aggregation to communicate with the terminal 20 by bundling multiple cells (multiple CCs (Component Carriers)). Carrier aggregation uses one PCell (Primary Cell) and one or more SCells (Secondary Cells).

The base station 10 transmits synchronization signals and system information to the terminal 20. The synchronization signals are, for example, NR-PSS and NR-SSS. The system information is transmitted, for example, by NR-PBCH or PDSCH, and is also referred to as broadcast information. As illustrated in FIG. 1, the base station 10 transmits control signals or data in DL (Downlink) to the terminal 20 and receives control signals or data in UL (Uplink) from the terminal 20. Here, what is transmitted by a control channel such as PUCCH and PDCCH is referred to as a control signal, and what is transmitted by a shared channel such as PUSCH and PDSCH is referred to as data, but these names are only examples.

The terminal 20 is a communication device with wireless communication functions, such as a smartphone, a cellular phone, a tablet, a wearable terminal, and an M2M (Machine-to-Machine) communication module. As illustrated in FIG. 1, the terminal 20 utilizes various communication services provided by a wireless communication system by receiving control signals or data in DL from the base station 10 and transmitting control signals or data in UL to the base station 10. Note that the terminal 20 may be referred to as a UE, and the base station 10 may be referred to as a gNB.

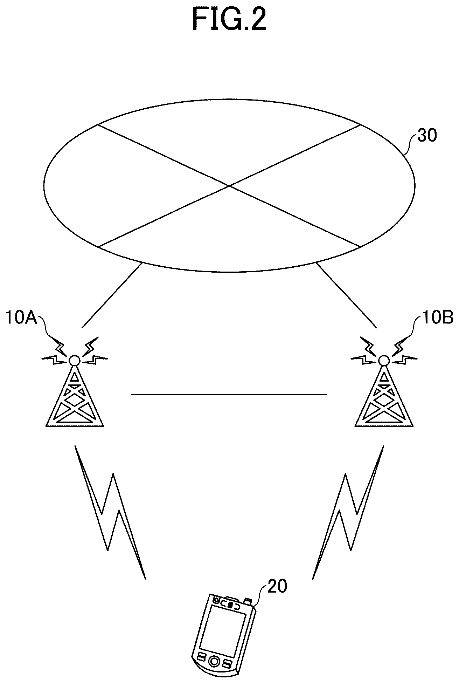

FIG. 2 is a diagram illustrating a wireless communication system example (2) according to the embodiment of the present invention. FIG. 2 illustrates a configuration example of a radio communication system when dual connectivity (DC) is executed. As illustrated in FIG. 2, there are provided a base station 10A serving as a master node (MN) and a base station 10B serving as a secondary node (SN). The base station 10A and the base station 10B are each connected to a core network 30. The terminal 20 can communicate with both the base station 10A and base station 10B.

A cell group provided by the base station 10A serving as a MN is referred to as a master cell group (MCG), and a cell group provided by the base station 10B serving as a SN is referred to as a secondary cell group (SCG). In the dual connectivity, an MCG includes one PCell and 0 or more SCells, and a SCG includes one PSCell (Primary SCG Cell) and 0 or more SCells.

Note that the dual connectivity may be a communication method using two communication standards, and any communication standards may be combined. For example, either NR and 6G standards may be combined, or LTE and 6G standards may be combined. Furthermore, the dual connectivity may be a communication method using three or more communication standards and may be called by other names different from the dual connectivity.

The processing operation in the present embodiment may be executed by the system configuration illustrated in FIG. 1, may be executed by the system configuration illustrated in FIG. 2, or may be executed by a system configuration other than these.

In 3GPP standardization, with the main purpose of reducing power consumption of terminals, a function of performing activation/deactivation of a secondary cell group in a dual connectivity operation has been discussed. For example, operations that are not performed in a state in which the secondary cell group is deactivated are specified to reduce power consumption.

For example, in a case where the secondary cell group is activated, PDCCH monitoring, RRM (Radio Resource Management) measurement, RLM (Radio Link Monitoring), beam failure detection/recovery, CSI-RS (Channel State Information - Reference Signal) measurement and reporting, configuration of timing advance, and SRS (Sounding Reference Signal) transmission are performed.

On the other hand, in a case where the secondary cell group is deactivated, for example, the PDCCH monitoring and the SRS transmission need not be performed.

Note that the RRM measurement is a measurement related to mobility such as handover and PSCell change. The RLM is monitoring for detecting DL out-of-synchronization. The beam failure detection/recovery is a function in which the terminal 20 detects beam failure and recovers. The timing advance is information for maintaining UL synchronization.

For example, the SCG activation may be requested by the MN, SN or UE. With respect to the SCG activation or the SCG deactivation, RRC (Radio Resource Control) signaling between the MN and the UE or between the MN and the SN may be used.

Here, in a case where the terminal 20 is indicated to perform the SCG activation from the network through the RRC signaling and where the terminal 20 is defined to follow the indication of the SCG activation from the network, the terminal 20 needs to perform the SCG activation and communication in accordance with the indication from the network even in a situation where it is not suitable to perform communication in which the SCG is activated, the situation including, for example, a case in which the remaining battery level of the terminal is low or a case in which the heat generation by the terminal is high.

Thus, with respect to the RRC signaling for the network-triggered SCG activation transition, in response to the indication to perform the SCG activation, the terminal 20 may respond with a message indicating failure or rejection using RRC signaling in response to the RRC signaling for the network-triggered SCG activation transition. That is, the terminal 20 may maintain the SCG deactivated state without performing the SCG activation.

Alternatively, with respect to the RRC signaling for the network-triggered SCG activation transition, in response to the indication for performing the SCG activation, the terminal 20 may perform the SCG activation while responding with a message requesting the SCG deactivation using RRC signaling in response to the RRC signaling for the network-triggered SCG activation transition.

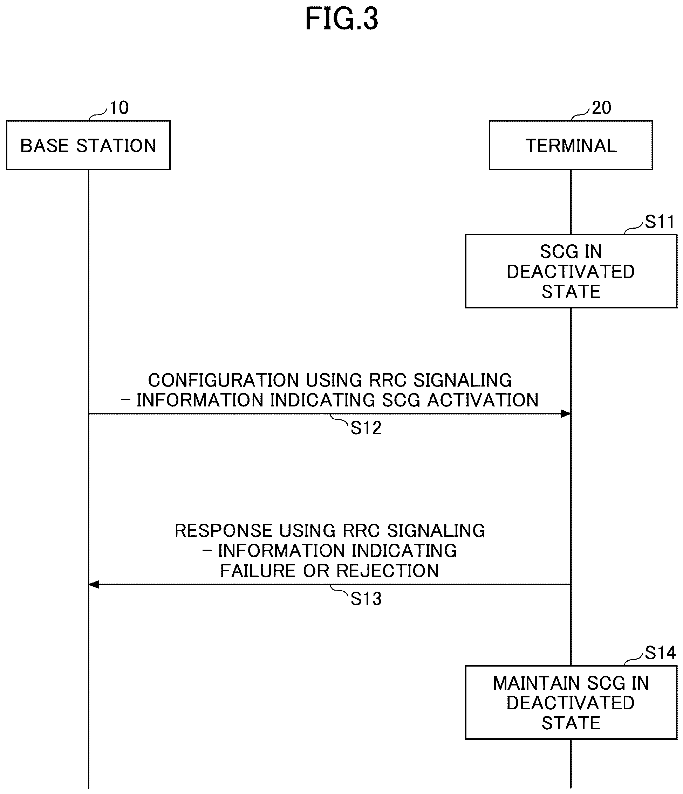

FIG. 3 is a sequence diagram illustrating a signaling example (1) according to the embodiment of the present invention. In step S11, the SCG is in the deactivated state in the terminal 20. In Step S12, the base station 10 transmits a configuration including information indicating the SCG activation using RRC signaling to the terminal 20.

The RRC signaling in step S12 may be, for example, an "RRCConnectionReconfiguration" message, an "RRCReconfiguration" message, or a "RRCResume" message. Note that the RRC message is not limited to the above examples, and may be an RRC message of another name or a new RRC message.

In the subsequent step S13, the terminal 20 transmits to the base station 10 a response using the RRC signaling including information indicating failure or rejection with respect to the SCG activation.

The RRC signaling including the information indicating failure or rejection in step S13 may be, for example, an "RRCConnectionReconfigurationComplete" message, a "RRCCReconfigurationComplete" message, or a "RRCResumeComplete" message. In addition, the RRC signaling including the information indicating failure or rejection in step S13 may be an "SCGfailureinformation" message. In the "SCGfailureinformation" message, "InabilityToactivation" may be added to the information element "cause", or "InabilityToactivation" may be added to another information element. Note that the RRC message is not limited to the above examples, and may be an RRC message of another name or a new RRC message. Also, the information element is not limited to the above example, and may be another information element.

In step S14, the terminal 20 maintains the deactivated state of the SCG.

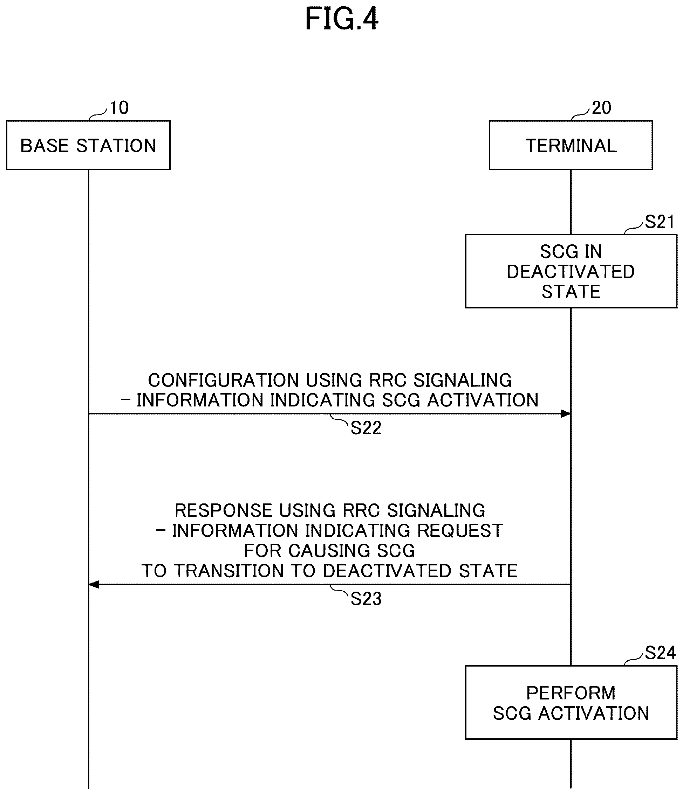

FIG. 4 is a sequence diagram illustrating a signaling example (2) according to the embodiment of the present invention. In step S21, the SCG is in the deactivated state in the terminal 20. In step S22, the base station 10 transmits a configuration using RRC signaling including information indicating the SCG activation to the terminal 20.

The RRC signaling in step S22 may be, for example, an "RRCConnectionReconfiguration" message, an "RRCReconfiguration" message, or a "RRCResume" message. Note that the RRC message is not limited to the above examples, and may be an RRC message of another name or a new RRC message.

In the subsequent step S23, the terminal 20 transmits to the base station 10 a response using RRC signaling including information indicating a request for causing the SCG to transition to the deactivated state.

The RRC signaling including the information indicating the request for causing the SCG to transition to the deactivated state in step S23 may be, for example, an "RRCConnectionReconfigurationComplete" message, a "RRCCReconfigurationComplete" message, or a "RRCResumeComplete" message. Further, the RRC signaling including the information indicating the request for causing the SCG to transition to the deactivated state in step S23 may be an "SCGfailureinformation" message. Note that the RRC message is not limited to the above examples, and may be an RRC message of another name or a new RRC message.

In step S24, the terminal 20 performs the SCG activation. Note that the execution order of step S24 and step S23 may be reversed.

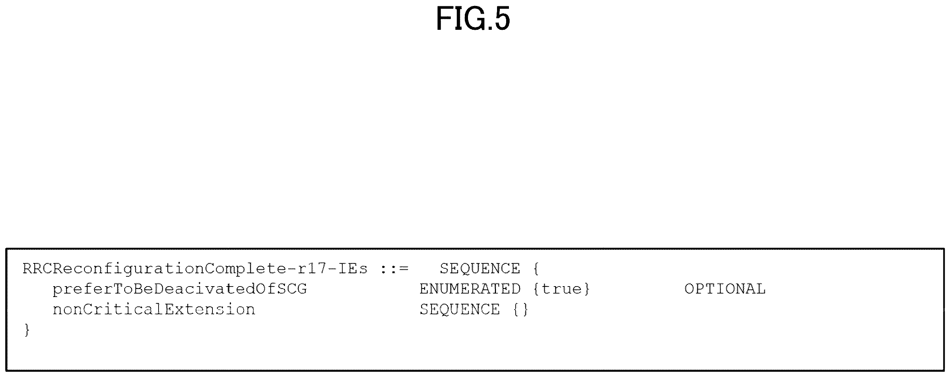

FIG. 5 is a diagram illustrating a signaling example (1) according to the embodiment of the present invention. The RRC signaling including the information indicating the request for causing the SCG to transition to the deactivated state in step S23 may be an "RRCReconfigurationComplete" message including an information element "preferToBeDeactivatedOfSCG" as shown in FIG. 5. The request for causing the SCG to transition to the deactivated state is indicated by configuring "true" in the information element "preferToBeDeactivatedOfSCG". Note that the information element is not limited to the above example, and may be another information element.

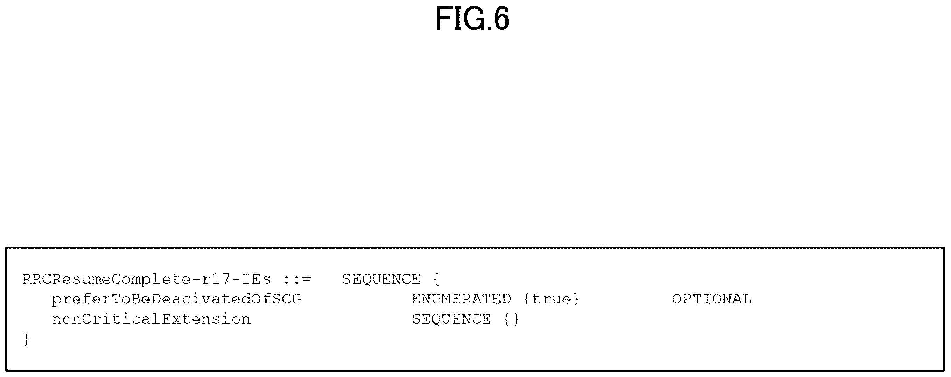

FIG. 6 is a diagram illustrating a signaling example (2) according to the embodiment of the present invention. The RRC signaling including the information indicating the request for causing the SCG to transition to the deactivated state in step S23 may be an "RRCResumeComplete" message including the information element "preferToBeDeactivatedOfSCG" as shown in FIG. 5. The request for causing the SCG to transition to the deactivated state is indicated by configuring "true" in the information element "preferToBeDeactivatedOfSCG". Note that the information element is not limited to the above example, and may be another information element.

With respect to the PSCell in which the SCG activated state or the SCG deactivated state is configured, the terminal 20 may transmit to the base station 10 failure or rejection with respect to the indication to perform the SCG activation by taking into account the heat generation, the processing load, the battery load, or the like, of the terminal 20. When the terminal 20 receives an indication to perform the SCG activation or when the SCG is activated, the terminal 20 may transmit information indicating the request for performing the SCG deactivation to the base station 10 by taking into account the heat generation, the processing load, the battery load, or the like, of the terminal 20.

For example, in a case where one condition or a combination of a plurality of conditions described in 1) to 7) below is satisfied, the terminal 20 may transmit to the base station 10 information indicating failure or rejection with respect to the indication to perform the SCG activation or information indicating the request for performing the SCG deactivation. In addition, the above-described conditions may be overwritten by the configuration on the user side of the terminal 20, may be changed by the user of the terminal 20, or may be configured by the network.
1) a case where the terminal 20 determines that the terminal 20 is overheated beyond a predetermined threshold
2) a case where the terminal 20 determines that the terminal 20 is in an overloaded state beyond a predetermined threshold
3) a case where the terminal 20 determines that the remaining battery level of the terminal 20 is lower than a predetermined threshold
4) a case where it is determined that the number of activated applications in the terminal 20 is smaller a predetermined threshold
5) a case where an expected data amount considering the server or application to be connected is lower than a predetermined threshold.
6) a case where a UL packet associated with a specific network slice (Single-Network Slice Selection Assistance Information (S-NSSAI)), a PDU (Protocol Data Unit) session (PDU session identifier), or a QoS (Quality of Service) flow (QoS Flow ID (QFI)) does not occur for a predetermined period
7) a case where a DL packet associated with a specific network slice (S-NSSAI), PDU session (PDU session identifier), or QoS flow (QFI) does not occur for a predetermined period

The "expected data amount considering the server or application to be connected" in 5) described-above may be a "data amount of communication to occur after the current time point" calculated from the content size, the host to be connected, the URL (Uniform Resource Locator), or the like, in the HTTP (Hyper Text Transfer Protocol) header.

According to the above-described embodiment, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10.

That is, in the wireless communication system, the terminal load during the communication according to dual connectivity can be reduced.

### (Device structure)

Next, an example of a functional structure of the base station 10 and the terminal 20 for performing the processes and operations described above will be described. The base station 10 and the terminal 20 include functions for executing the embodiment described above. However, each of the base stations 10 and the terminal 20 may include only part of the functions of the embodiment.

### <Base station 10>

FIG. 7 is a diagram illustrating an example functional structure of the base station 10. As illustrated in FIG. 7, the base station 10 includes a transmitting unit 110, a receiving unit 120, a configuration unit 130, and a control unit 140. The functional structure illustrated in FIG. 7 is only one example. If the operation according to the embodiment of the present invention can be performed, any functional categories and any functional unit names may be used. The transmitting unit 110 and the receiving unit 120 may be referred to as communication units.

The transmitting unit 110 includes a function for generating signals to be transmitted to the terminal 20 side and transmitting the signals wirelessly. The receiving unit 120 includes a function of receiving various signals transmitted from the terminal 20 and acquiring, for example, information about the higher layers from the received signals. The transmitting unit 110 has a function to transmit NR-PSS, NR-SSS, NR-PBCH, DL/UL control signals, DL data, and the like to the terminal 20. Furthermore, the transmitting unit 110 transmits the configuration information described in the embodiment and the like.

The configuration unit 130 stores the configuration information prepared in advance and various configuration information to be transmitted to the terminal 20 in a storage device, and reads the information from the storage device as needed. The control unit 140 controls, for example, the entirety of the base station 10 including control relating to signal transmission and reception, and so forth. Note that a functional unit relating to signal transmission in the control unit 140 may be included in the transmitting unit 110, and a functional unit relating to signal reception in the control unit 140 may be included in the receiving unit 120. The transmitting unit 110 and the receiving unit 120 may be referred to as a transmitter and a receiver, respectively.

### <Terminal 20>

FIG. 8 is a diagram illustrating an example functional structure of the terminal 20. As illustrated in FIG. 8, the terminal 20 includes a transmitting unit 210, a receiving unit 220, a configuration unit 230, and a control unit 240. The functional structure illustrated in FIG. 8 is only one example. If the operation according to the embodiment of the present invention can be performed, any functional categories and functional unit names may be used. The transmitting unit 210 and the receiving unit 220 may be referred to as communication units.

The transmitting unit 210 generates transmission signals from the transmission data and transmits the transmission signals wirelessly. The receiving unit 220 receives various signals wirelessly and acquires signals of higher layers from the received signal of the physical layer. The transmitting unit 210 transmits HARQ-ACK, and the receiving unit 220 receives the configuration information described in the embodiment.

The configuration unit 230 stores various configuration information received from the base station 10 by the receiving unit 220 in the storage device, and reads the stored configuration information from the storage device as needed. The configuration unit 230 also stores the configuration information that is prepared in advance. The control unit 240 controls the entire terminal 20 including control relating to signal transmission and reception. Note that a functional unit relating to signal transmission in the control unit 240 may be included in the transmitting unit 210, and a functional unit relating to signal reception in the control unit 240 may be included in the receiving unit 220. Also, the transmitting unit 210 and the receiving unit 220 may be referred to as a transmitter and a receiver, respectively.

### (Hardware structure)

The block diagrams (FIG. 7 and FIG. 8) used in the description of the above embodiment illustrate blocks of functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.) and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, expectation, deeming, broadcasting, notifying, communicating, forwarding, configuring, reconfiguring, allocating, mapping, and assigning. For example, a functional block (component) that works a transmission function is referred to as a transmitting unit or a transmitter. In either case, as described above, the method of implementation is not particularly limited.

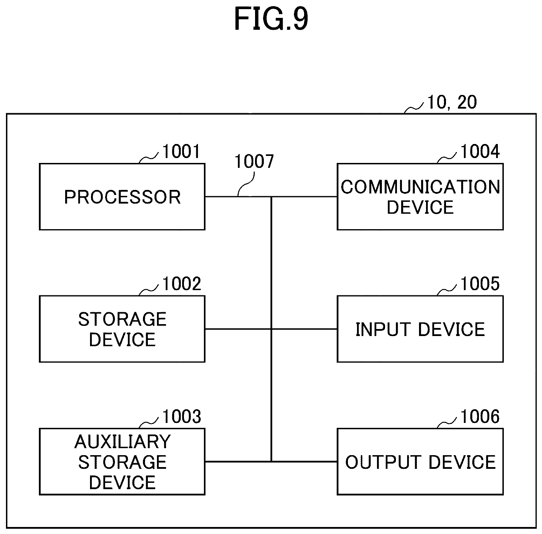

For example, the base station 10, the terminal 20, and so forth, according to the embodiment of the present disclosure may function as a computer for processing the wireless communication method of the present disclosure. FIG. 9 is a diagram illustrating an example hardware structure of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be read as circuit, device, unit, and so forth. The hardware structure of the base station 10 and the terminal 20 may be configured to include one or more of the devices illustrated in the drawings or may be configured without some of the devices.

The functions of the base station 10 and the terminal 20 are realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processing in accordance with the above. As for the programs, programs that cause the computer to execute at least part of the operations described in the above embodiment may be used. For example, the control unit 140 of the base station 10 illustrated in FIG. 7 may be stored in the storage device 1002 and implemented by control programs operating in the processor 1001. For example, the control unit 240 of the terminal 20 illustrated in FIG. 8 may be stored in the storage device 1002 and implemented by control programs operating in the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 is a computer-readable recording medium and may be composed of at least one of, for example, a ROM (Read Only Memory), an EPROM (Erasable Programmable ROM), an EEPROM (Electrically Erasable Programmable ROM), a RAM (Random Access Memory), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 is a computer-readable recording medium and may be composed of at least one of an optical disk, such as a CD-ROM (Compact Disc ROM), a hard disk drive, a flexible disk, a magneto-optical disk (for example, a compact disk, a digital versatile disk, a Blu-ray disk (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network, and is also referred to as a network device, a network controller, a network card, a communication module, or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be implemented in such a way that the transmission unit and the reception unit are physically or logically separated from each other.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an ASIC (Application Specific Integrated Circuit), a PLD (Programmable Logic Device), an FPGA (Field Programmable Gate Array), and so forth, and some or all of the functional blocks may be implemented by the hardware. For example, the processor 1001 may be implemented using at least one of these hardware components.

### (Summary of embodiment)

As described above, according to the embodiment of the present invention, a terminal is provided. The terminal has: a communication unit configured to perform communication to which dual connectivity is applied with a base station; a receiving unit configured to receive signaling indicating an indication to perform activation of a secondary cell group from the base station; and a transmitting unit configured to transmit to the base station a response including information indicating a rejection with respect to the indication or information indicating a request for performing deactivation of the secondary cell group.

According to the above-described configuration, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10. That is, in the wireless communication system, the terminal load during the communication according to dual connectivity can be reduced.

The terminal may further include a control unit configured not to cause the secondary cell group to transition to an activated state in a case where the transmitting unit transmits to the base station the response including information indicating the rejection with respect to the indication, and configured to cause the secondary cell group to transition to the activated state in a case where the transmitting unit transmits to the base station the response including information indicating the request. With this configuration, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10.

The terminal may further include a control unit configured to determine whether to transmit the response, based on a condition. With this configuration, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10.

The control unit may determine to transmit the response in a case where the terminal itself is determined to be overheated. With this configuration, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10.

The control unit may determine to transmit the response in a case where a remaining battery level of the terminal itself is determined to be lower than a predetermined threshold. With this configuration, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10.

A communication method executed by a terminal is provided. The communication method includes: performing communication to which dual connectivity is applied with a base station; receiving signaling indicating an indication to perform activation of a secondary cell group from the base station, and transmitting a response including information indicating a rejection with respect to the indication or information indicating a request for performing deactivation of the secondary cell group to the base station.

According to the above-described configuration, in a case where the transition of activating the SCG is determined by the terminal 20 to be difficult or inappropriate, the terminal load can be reduced by transmitting an indication of rejection with respect to the SCG activation or a request for performing the SCG deactivation to the base station 10. That is, in the wireless communication system, the terminal load during the communication according to dual connectivity can be reduced.

### (Notes on embodiment)

As described above, one or more embodiments have been described. The present disclosure is not limited to the above embodiments. Those skilled in the art would understand that there may be various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present disclosure. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of convenience of processing description, the base station 10 and the terminal 20 are described using functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a RAM (Random Access Memory), a flash memory, a ROM (Read-Only Memory), an EPROM, an EEPROM, a register, an HDD (Hard Disk Drive), a removable disk, a CD-ROM, a database, a server, or any other appropriate storage medium.

Furthermore, notification of information is not limited to the aspect or embodiment described in the present disclosure and may be provided by using any other method. For example, the notification of information may be provided by physical layer signaling (for example, DCI (Downlink Control Information) or UCI (Uplink Control Information)), higher layer signaling (for example, RRC (Radio Resource Control) signaling, MAC (Medium Access Control) signaling, broadcast information (MIB (Master Information Block), SIB (System Information Block), etc.), other signals, or a combination thereof. Furthermore, RRC signaling may be referred to as an RRC message and may be, for example, an RRC connection setup message, an RRC connection reconfiguration message, or the like.

Each aspect and embodiment described in the present disclosure may be applied to at least one of LTE (Long Term Evolution), LTE-A (LTE-Advanced), SUPER 3G, IMT-Advanced, 4G (4th Generation mobile communication system), 5G (5th Generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), a system using any other appropriate system, and next generation systems extended based on these standards. Furthermore, a plurality of systems (for example, a combination of at least one of LTE and LTE-A with 5G) may be combined to be applied.

The order of the processing procedures, the order of the sequences, the order of the flowcharts, and the like of the respective aspect/embodiment described in this specification may be changed, provided that there is no contradiction. For example, the method described in the present disclosure presents elements of various steps with an example order and is not limited to the presented, specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case has been illustrated above in which there is one network node other than the base station 10. The one network node may be a combination of a plurality of other network nodes (for example, MME and S-GW).

Information, a signal, or the like described in the present disclosure may be output from a higher layer (or from a lower layer) to a lower layer (or to a higher layer). Information, a signal, or the like described in the present disclosure may be input and output via a plurality of network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using at least one of a wired technology (such as a coaxial cable, a fiber optic cable, a twisted pair, or a DSL (Digital Subscriber Line)) and a radio technology (such as infrared rays or a microwave), at least one of these wired technology and radio technology is included in a definition of a transmission medium.

Information, signals, and the like described in the present disclosure may be expressed using any one of a variety of different techniques. For example, data, instructions, commands, information, signals, bits, symbols, chips, and the like which are mentioned throughout the above description may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC: Component Carrier) may be referred to as a "carrier frequency", a "cell", a "frequency carrier", or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, the radio resources may be those indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS: Base Station)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to by a term such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS)", "user terminal", "user equipment (UE)", "terminal", and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car, or the like), or a robot (manned type or unmanned type). At least one of the base station and the mobile station includes a device that need not move during communication operation. For example, at least one of the base station and the mobile station may be an Internet of Things (IoT) device such as a sensor.

Furthermore, the base station in the present disclosure may be replaced by the user terminal. For example, the aspect/embodiment of the present disclosure may be applied to a configuration in which communication between the base station and the user terminal is replaced by communication between multiple terminals 20 (such communication may be referred to as D2D (Device-to-Device), V2X (Vehicle-to-Everything), etc.). In this case, the terminals 20 may have the functions of the above-described base station 10. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging", "calculating", "computing", "processing", "deriving", "investigating", "looking up (for example, searching in a table, a database, or another data structure)", "searching", "inquiring", or "ascertaining" as "determining" and/or "deciding". Furthermore, the "determination" and "decision" may include deeming "receiving (for example, receiving information)", "transmitting (for example, transmitting information)", "inputting", "outputting", or "accessing (for example, accessing data in a memory)" as "determining" and/or "deciding". Furthermore, the "determination" and "decision" may include deeming "resolving", "selecting", "choosing", "establishing", or "comparing" as "determining" and/or "deciding". Namely, the "determination" and "decision" may include deeming an operation as "determining" and/or "deciding". Furthermore, "determining" may be replaced with "assuming", "expecting", "considering", or the like.

The terms "connected", "coupled", or variations thereof may mean any direct or indirect connection or coupling between two or more elements and may include the presence of one or more intermediate elements between two elements which are "connected" or "coupled". The coupling or the connection between the elements may be physical, logical, or a combination thereof. For example, "connection" may be replaced with "access". In a case of using in the present disclosure, two elements may be considered to be "connected" or "coupled" with each other using at least one of one or more electric wires, cables and a printed electrical connection or using electromagnetic energy having a wavelength in a radio frequency domain, a microwave region, or a light (both visible and non-visible) region as non-limiting and non-exhaustive examples.

A reference signal may be abbreviated as RS (Reference Signal) and may be referred to as a pilot, depending on the standard that is applied.

The phrase "based on" used in the present disclosure is not limited to "based only on" unless otherwise stated. In other words, the phrase "based on" means both "based only on" and "based at least on".

Any reference to an element using a designation such as "first" or "second", used in the present disclosure, does not generally restrict quantities or the order of those elements. Such designation can be used in the present disclosure as a convenient method of distinguishing between two or more elements. Thus, reference to the first and second elements does not mean that only two elements can be adopted there, or the first element must precede the second element in a certain way.

Furthermore, "means" in the configuration of each of the above devices may be replaced with "unit", "circuit", "device", or the like.

When "include", "including", and variations thereof are used in the present disclosure, these terms are intended to be comprehensive, similar to the term "provided with (comprising)". Furthermore, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame configuration, a specific filtering process performed in the frequency domain by a transceiver, a specific windowing process performed in the time domain by a transceiver, and the like.

A slot may include one or more symbols (OFDM (Orthogonal Frequency Division Multiplexing) symbols, SC-FDMA (Single Carrier Frequency Division Multiple Access) symbols, etc.) in the time domain. A slot may be a time unit based on numerology.

A slot may include a plurality of mini slots. Each mini slot may include one or more symbols in the time domain. Furthermore, a mini slot may be referred to as a sub-slot. A mini slot may include fewer symbols than a slot. PDSCH (or PUSCH) that is transmitted in a unit of time greater than a mini slot may be referred to as PDSCH (or PUSCH) mapping type A. PDSCH (or PUSCH) that is transmitted using a mini slot may be referred to as PDSCH (or PUSCH) mapping type B.

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI), or a plurality of consecutive subframes may be referred to as a TTI, or one slot or one mini slot may be referred to as a TTI. In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a slot, a mini slot, or the like, instead of a subframe.

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped, may be shorter than the TTI.

When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than a common TTI may be referred to as a reduced TTI, a short TTI, a partial or fractional TTI, a reduced subframe, a short subframe, a mini slot, a sub slot, a slot, or the like.

Furthermore, a long TTI (for example, a normal TTI, a subframe, etc.) may be replaced with a TTI having a time length exceeding 1 ms, and a short TTI (for example, a reduced TTI, etc.) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time field of an RB may include one or more symbols and may have a length of one slot, one mini slot, one subframe, or one TTI. One TTI, one subframe, or the like may be formed with one or more resource blocks.

Furthermore, one or more RBs may be referred to as a physical resource block (PRB: Physical RB), a subcarrier group (SCG), a resource element group (REG), a PRB pair, an RB pair, or the like.

Furthermore, a resource block may be formed with one or more resource elements (REs). For example, one RE may be a radio resource field of one subcarrier and one symbol.

A bandwidth part (BWP) (which may be referred to as a partial bandwidth or the like) may indicate a subset of consecutive common resource blocks (common RBs) for a certain numerology in a certain carrier. Here, a common RB may be specified by an index of an RB based on a common reference point of a carrier. A PRB may be defined in a BWP and numbered in the BWP.

The BWP may include BWP for UL (UL BWP) and BWP for DL (DL BWP). In the terminal 20, one or more BWPs may be configured in one carrier.

At least one of configured BWPs may be active, and the terminal 20 need not assume that predetermined signals/channels are transmitted and received outside the active BWP. Furthermore, a "cell", a "carrier", or the like in the present disclosure may be replaced with a "BWP".

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a", "an", or "the" in English is added by a translation, the present disclosure may include a case in which a noun following the article is the plural.

In the present disclosure, "A and B are different" may mean "A and B are different from each other". However, this may also mean "A and B are different from C". Like the interpretation of "different", terms such as "separated" or "combined" may be interpreted.

Each aspect/embodiment described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Although the present disclosure is described above in detail, it is obvious to those skilled in the art that the present disclosure is not limited to the embodiment described in the present disclosure. The present disclosure may be implemented as revised and modified embodiments without departing scope of the present disclosure as set forth in the accompanying claims. Accordingly, the description of the present disclosure is for the purpose of illustration and does not have any restrictive meaning to the present disclosure.

### [DESCRIPTION OF THE REFERENCE NUMERALS]

- 10: Base station
- 110: Transmitting unit
- 120: Receiving unit
- 130: Configuration unit
- 140: Control unit
- 20: Terminal
- 210: Transmitting unit
- 220: Receiving unit
- 230: Configuration unit
- 240: Control unit
- 30: Core network
- 1001: Processor
- 1002: Storage device
- 1003: Auxiliary storage device
- 1004: Communication device
- 1005: Input device
- 1006: Output device

## Claims

1. A terminal (20) comprising:
a receiving unit (220) configured to receive a first Radio Resource Control, RRC, signaling from a base station (10) in a communication according to dual connectivity;
a control unit (240) configured to determine whether or not to transmit a request for causing a secondary cell group in the communication to transition to a deactivated state, based on a configuration; and
a transmitting unit (210) configured to transmit a second RRC signaling including information indicating a request for causing the secondary cell group in the communication to transition to a deactivated state to the base station (10) after the first RRC signaling is received in a case where the control unit (240) determines to transmit the request for causing the secondary cell group in the communication to transition to a deactivated state,
wherein whether causing the secondary cell group to transition to the deactivated state is preferred is indicated by a value configured in an information element included in the second RRC signaling.

2. A communication method executed by a terminal (20), the communication method comprising:
receiving a first Radio Resource Control, RRC, signaling from a base station (10) in a communication according to dual connectivity;
determining whether or not to transmit a request for causing a secondary cell group in the communication to transition to a deactivated state, based on a configuration; and
transmitting a second RRC signaling including information indicating a request for causing the secondary cell group in the communication to transition to a deactivated state to the base station (10) after the first RRC signaling is received in a case where transmitting the request for causing the secondary cell group in the communication to transition to a deactivated state,
wherein whether causing the secondary cell group to transition to the deactivated state is preferred is indicated by a value configured in an information element included in the second RRC signaling.

3. A base station (10) comprising:
a transmitting unit (110) configured to transmit a first Radio Resource Control, RRC, signaling to a terminal (20) in a communication according to dual connectivity; and
a receiving unit (120) configured to receive a second RRC signaling including information indicating a request for causing the secondary cell group in the communication to transition to a deactivated state from the terminal (20) after the first RRC signaling is transmitted in a case where the request for causing the secondary cell group in the communication to transition to a deactivated state is determined to be transmitted,
wherein whether causing the secondary cell group to transition to the deactivated state is preferred is indicated by a value configured in an information element included in the second RRC signaling.

4. A wireless communication system comprising: a terminal (20); and a base station (10) performing a communication according to dual connectivity, wherein
the terminal (20) includes:
a receiving unit (220) configured to receive a first Radio Resource Control, RRC, signaling from the base station (10) in the communication according to dual connectivity;
a control unit (240) configured to determine whether or not to transmit a request for causing a secondary cell group in the communication to transition to a deactivated state, based on a configuration; and
a transmitting unit (210) configured to transmit a second RRC signaling including information indicating a request for causing the secondary cell group in the communication to transition to a deactivated state to the base station (10) after the first RRC signaling is received in a case where the control unit (240) determines to transmit the request for causing the secondary cell group in the communication to transition to a deactivated state,
wherein whether causing the secondary cell group to transition to the deactivated state is preferred is indicated by a value configured in an information element included in the second RRC signaling, and
the base station (10) includes:
a transmitting unit (110) configured to transmit the first RRC signaling to the terminal (20), and
a receiving unit (120) configured to receive the second RRC signaling from the terminal (20) after the first RRC signaling.

## Patentansprüche

1. Endgerät (20), umfassend:
eine Empfangseinheit (220), die konfiguriert ist, eine erste Funkressourcensteuerungs-, RRC-, Signalisierung von einer Basisstation (10) in einer Kommunikation gemäß einer dualen Konnektivität zu empfangen;
eine Steuereinheit (240), die konfiguriert ist, zu bestimmen, ob eine Anfrage übertragen werden soll oder nicht, um zu veranlassen, dass eine sekundäre Zellengruppe in der Kommunikation in einen desaktivierten Zustand übergeht, basierend auf einer Konfiguration; und
eine Übertragungseinheit (210), die konfiguriert ist, in einem Fall, bei dem die Steuereinheit (240) bestimmt, die Anfrage zum Veranlassen, dass die sekundäre Zellengruppe in der Kommunikation in einen desaktivierten Zustand übergeht, zu übertragen, eine zweite RRC-Signalisierung, einschließlich Informationen, die eine Anfrage angeben, um zu veranlassen, dass die sekundäre Zellengruppe in der Kommunikation in einen desaktivierten Zustand übergeht, an die Basisstation (10) zu übertragen, nachdem die erste RRC-Signalisierung empfangen wurde,
wobei ein Wert, der in einem in der zweiten RRC-Signalisierung enthaltenen Informationselement konfiguriert ist, angibt, ob es bevorzugt ist, zu veranlassen, die sekundäre Zellengruppe in den desaktivierten Zustand übergehen zu lassen.

2. Kommunikationsverfahren, das von einem Endgerät (20) ausgeführt wird, wobei das Kommunikationsverfahren Folgendes umfasst:
Empfangen einer ersten Funkressourcensteuerungs-, RRC-, Signalisierung von einer Basisstation (10) in einer Kommunikation gemäß einer dualen Konnektivität;
Bestimmen, ob eine Anfrage übertragen werden soll oder nicht, um zu veranlassen, dass eine sekundäre Zellengruppe in der Kommunikation in einen desaktivierten Zustand übergeht, basierend auf einer Konfiguration; und
Übertragen einer zweiten RRC-Signalisierung, einschließlich Informationen, die eine Anfrage angeben, um zu veranlassen, dass die sekundäre Zellengruppe in der Kommunikation in einen desaktivierten Zustand übergeht, an die Basisstation (10), nachdem die erste RRC-Signalisierung empfangen wurde, in einem Fall der Übertragung der Anfrage zum Veranlassen, dass die sekundäre Zellengruppe in der Kommunikation in einen desaktivierten Zustand übergeht,
wobei ein Wert, der in einem in der zweiten RRC-Signalisierung enthaltenen Informationselement konfiguriert ist, angibt, ob es bevorzugt ist, zu veranlassen, die sekundäre Zellengruppe in den desaktivierten Zustand übergehen zu lassen.

3. Basisstation (10), umfassend:
eine Übertragungseinheit (110), die konfiguriert ist, eine erste Funkressourcensteuerungs-, RRC-, Signalisierung an ein Endgerät (20) in einer Kommunikation gemäß einer dualen Konnektivität zu übertragen; und
eine Empfangseinheit (120), die konfiguriert ist, in einem Fall, bei dem bestimmt wird, dass die Anfrage zum Veranlassen, dass die sekundäre Zellengruppe in der Kommunikation in einen desaktivierten Zustand übergeht, übertragen werden soll, eine zweite RRC-Signalisierung, einschließlich Informationen, die eine Anfrage angeben, um zu veranlassen, dass die sekundäre Zellengruppe in der Kommunikation in einen desaktivierten Zustand übergeht, vom Endgerät (20) zu empfangen, nachdem die erste RRC-Signalisierung übertragen wurde,
wobei ein Wert, der in einem in der zweiten RRC-Signalisierung enthaltenen Informationselement konfiguriert ist, angibt, ob es bevorzugt ist, zu veranlassen, die sekundäre Zellengruppe in den desaktivierten Zustand übergehen zu lassen.

4. Drahtloskommunikationssystem, umfassend: ein Endgerät (20); und eine Basisstation (10), die eine Kommunikation gemäß einer dualen Konnektivität durchführt, wobei
das Endgerät (20) Folgendes einschließt:
eine Empfangseinheit (220), die konfiguriert ist, eine erste Funkressourcensteuerungs-, RRC-, Signalisierung von der Basisstation (10) in einer Kommunikation gemäß einer dualen Konnektivität zu empfangen;
eine Steuereinheit (240), die konfiguriert ist, zu bestimmen, ob eine Anfrage übertragen werden soll oder nicht, um zu veranlassen, dass eine sekundäre Zellengruppe in der Kommunikation in einen desaktivierten Zustand übergeht, basierend auf einer Konfiguration; und
eine Übertragungseinheit (210), die konfiguriert ist, in einem Fall, bei dem die Steuereinheit (240) bestimmt, die Anfrage zum Veranlassen, dass die sekundäre Zellengruppe in der Kommunikation in einen desaktivierten Zustand übergeht, zu übertragen, eine zweite RRC-Signalisierung, einschließlich Informationen, die eine Anfrage angeben, um zu veranlassen, dass die sekundäre Zellengruppe in der Kommunikation in einen desaktivierten Zustand übergeht, an die Basisstation (10) zu übertragen, nachdem die erste RRC-Signalisierung empfangen wurde,
wobei ein Wert, der in einem in der zweiten RRC-Signalisierung enthaltenen Informationselement konfiguriert ist, angibt, ob es bevorzugt ist, zu veranlassen, die sekundäre Zellengruppe in den desaktivierten Zustand übergehen zu lassen; und
die Basisstation (10) Folgendes einschließt:
eine Übertragungseinheit (110), die konfiguriert ist, die erste RRC-Signalisierung an das Endgerät (20) zu übertragen, und
eine Empfangseinheit (120), die konfiguriert ist, die zweite RRC-Signalisierung vom Endgerät (20) nach der ersten RRC-Signalisierung zu empfangen.

## Revendications

1. Terminal (20) comprenant :
une unité de réception (220) configurée pour recevoir une première signalisation de commande de ressources radio, RRC, en provenance d'une station de base (10) dans une communication selon la double connectivité ;
une unité de commande (240) configurée pour déterminer s'il convient ou non de transmettre une demande pour faire passer un groupe de cellules secondaires dans la communication à l'état désactivé, sur la base d'une configuration ; et
une unité de transmission (210) configurée pour transmettre une seconde signalisation RRC incluant des informations indiquant une demande pour faire passer le groupe de cellules secondaires dans la communication à l'état désactivé vers la station de base (10) après que la première signalisation RRC a été reçue dans le cas où l'unité de commande (240) détermine de transmettre la demande pour faire passer le groupe de cellules secondaires dans la communication à l'état désactivé,
dans lequel le point de savoir si le fait de faire passer le groupe de cellules secondaires à l'état désactivé est préféré est indiqué par une valeur configurée dans un élément d'information inclus dans la seconde signalisation RRC.

2. Procédé de communication exécuté par un terminal (20), le procédé de communication comprenant :
la réception d'une première signalisation de commande de ressources radio, RRC, en provenance d'une station de base (10) dans une communication selon la double connectivité ;
la détermination de savoir s'il convient ou non de transmettre une demande pour faire passer un groupe de cellules secondaires dans la communication à l'état désactivé, sur la base d'une configuration ; et
la transmission d'une seconde signalisation RRC incluant des informations indiquant une demande pour faire passer le groupe de cellules secondaires dans la communication à l'état désactivé vers la station de base (10) après que la première signalisation RRC a été reçue dans un cas de transmission de la demande pour faire passer le groupe de cellules secondaires dans la communication à l'état désactivé,
dans lequel le point de savoir si le fait de faire passer le groupe de cellules secondaires à l'état désactivé est préféré est indiqué par une valeur configurée dans un élément d'information inclus dans la seconde signalisation RRC.

3. Station de base (10) comprenant :
une unité de transmission (110) configurée pour transmettre une première signalisation de commande de ressources radio, RRC, à un terminal (20) dans une communication selon la double connectivité ; et
une unité de réception (120) configurée pour recevoir une seconde signalisation RRC incluant des informations indiquant une demande pour faire passer le groupe de cellules secondaires dans la communication à l'état désactivé en provenance du terminal (20) après que la première signalisation RRC a été transmise dans le cas où la demande pour faire passer le groupe de cellules secondaires dans la communication à l'état désactivé a été déterminée comme devant être transmise,
dans laquelle le point de savoir si le fait de faire passer le groupe de cellules secondaires à l'état désactivé est préféré est indiqué par une valeur configurée dans un élément d'information inclus dans la seconde signalisation RRC.

4. Système de communication sans fil comprenant : un terminal (20) ; et une station de base (10) effectuant une communication selon la double connectivité, dans lequel
le terminal (20) inclut :
une unité de réception (220) configurée pour recevoir une première signalisation de commande de ressources radio, RRC, en provenance de la station de base (10) dans la communication selon la double connectivité ;
une unité de commande (240) configurée pour déterminer s'il convient ou non de transmettre une demande pour faire passer un groupe de cellules secondaires dans la communication à l'état désactivé, sur la base d'une configuration ; et
une unité de transmission (210) configurée pour transmettre une seconde signalisation RRC incluant des informations indiquant une demande pour faire passer le groupe de cellules secondaires dans la communication à l'état désactivé vers la station de base (10) après que la première signalisation RRC a été reçue dans le cas où l'unité de commande (240) détermine de transmettre la demande pour faire passer le groupe de cellules secondaires dans la communication à l'état désactivé,
dans lequel le point de savoir si le fait de faire passer le groupe de cellules secondaires à l'état désactivé est préféré est indiqué par une valeur configurée dans un élément d'information inclus dans la seconde signalisation RRC, et
la station de base (10) inclut :
une unité de transmission (110) configurée pour transmettre la première signalisation RRC au terminal (20), et
une unité de réception (120) configurée pour recevoir la seconde signalisation RRC en provenance du terminal (20) après la première signalisation RRC.
